# EUROPEAN PATENT APPLICATION

(11) **EP 4 624 863 A1**
(43) Date of publication of application: **01.10.2025**
(21) Application number: 22966397.6
(22) Date of filing: 24.12.2022
(51) Int. Cl.: F42D 5/045

(54) **LOW-IMPACT, LOW-OVERLOAD FUEL GAS DAMPING-TYPE PYROTECHNIC DRIVING APPARATUS**

(30) Priority: 21.11.2022 CN 202211457300
(71) Applicant: Sichuan Aerospace Chuannan Initiating Explosive Technology Limited, Luzhou, Sichuan 646099 (CN)
(72) Inventor: DENG, Fei, Luzhou, Sichuan 646099 (CN); CHEN, Yong, Luzhou, Sichuan 646099 (CN); LIU, Mingxing, Luzhou, Sichuan 646099 (CN); CHEN, Anchun, Luzhou, Sichuan 646099 (CN); MAO, Yifeng, Luzhou, Sichuan 646099 (CN); WANG, Bing, Luzhou, Sichuan 646099 (CN); LIU, Shengkai, Luzhou, Sichuan 646099 (CN); HAN, Linsheng, Luzhou, Sichuan 646099 (CN); LIU, Zhenyun, Luzhou, Sichuan 646099 (CN)
(74) Representative: Studio Torta S.p.A.
(86) International application number: PCT/CN2022/141711
(87) International publication number: WO 2024/108718

(57) **Abstract**

Disclosed is a pyrotechnic driving device, including: a housing, a rear cover, an end cover, a special-shaped nut, a fuel gas generator, a sleeve, a force bearing column, and a piston rod. An accommodating cavity P1 is formed between the sleeve and the housing, an accommodating cavity P2 is formed between the sleeve and the piston rod, and there is an accommodating cavity P3 between the force bearing column and the special-shaped nut. A fuel gas outlet of the fuel gas generator discharges fuel gas into an accommodating cavity P4 that is inside the housing and located between the special-shaped nut and the rear cover, and the fuel gas in the accommodating cavity P4 enters the accommodating cavity P1 by means of a fuel gas channel on the special-shaped nut. In an early operation stage, the fuel gas in the accommodating cavity P1 enters the accommodating cavity P3 by means of the accommodating cavity P2, and the fuel gas in the accommodating cavity P3 is configured to exert an acting force on the force bearing column, so that the piston rod moves away from the special-shaped nut. In middle and late operation stages, the fuel gas in the accommodating cavity P1 enters the accommodating cavity P3 by means of a through hole on the sleeve. The low-impact, low-overload pyrotechnic displacement driving device provided by the present disclosure has both functions of initial locking and in-place locking.

## Description

### CROSS-REFERENCE TO RELATED APPLICATIONS

This application claims the priority of Chinese patent application No. 202211457300.3 filed on Nov. 21, 2022, named "a low-impact and low-overload fuel gas damping pyrotechnic driving device", the entire contents of which are incorporated herein by reference.

### FIELD

The application relates to the technical field of pyrotechnic driving, in particular to a fuel gas damping pyrotechnic driving device with low impact and low overload.

### BACKGROUND

The pyrotechnic driving device belongs to initiating explosive device, which utilizes the energy generated by gunpowder combustion to do external work to complete the predetermined function. Because the gunpowder combustion produces fuel gas quickly and the product moves violently, it is often accompanied by great impact and overload when working. At present, initiating explosive device is one of the main sources of impact on spacecraft, and the impact of initiating explosive device causes local mechanical transient response of equipment, leading to abnormal operation of local equipment or failure of model test and etc.

Displacement driving is a typical operation condition of pyrotechnic driving device, which drives a target object to move from an initial position to a target position. Because the pyrotechnic driving device relies on fuel gas expansion to do work, the initial cavity is small and the pressure in it is high and the start-up overload is large; and when the driving target load is in place, with the sudden change of speed, the impact or deceleration overload will occur. Therefore, there is also a high requirement for the overload resistance of the load.

In view of the above situations, the large impact and high overload seriously limit the application of initiating explosive devices on devices (such as satellites) with precision apparatus spread all over. However, compared with the traditional electric drive, the pyrotechnic driving cylinder device is small in volume and light in weight, and is more suitable for operation conditions of one-time action. If the impact and output overload of initiating explosive device may be greatly reduced to replace the traditional electric drive, the structural weight will be greatly reduced and more payloads may be installed on the satellite. Therefore, reducing impact and reducing overload have always been one of the research focuses of initiating explosive device in various countries.

The impact of the initiating device is mainly composed of two parts, in which one part of impact is caused by the reciprocating motion of high-pressure fuel gas and detonation products in the cavity, or by the destruction or impact of the sealing structure of the initiating element at the moment of ignition, that is, one part of impact is ignition impact; and the other part of impact is the impact caused by the movement impact of other structural members or release of large stress.

At present, the pyrotechnic driving device mainly realizes deceleration and impact reduction by incorporating damping structures, and main damping structures are generally hydraulic damping and pneumatic damping. The hydraulic damping structure may achieve extremely uniform driving speed during the movement, but because the damping force is related to the liquid flow rate, the initial speed at the start-up moment is zero and the damping force is also zero, so there is still a big start-up impact under the action of instantaneous high-pressure fuel gas. There are two kinds of air pressure damping structures. In one kind of air pressure damping structure, fuel gas enters the damping cavity from the power cavity, which may realize pneumatic buffering in the final state of motion to avoid high-speed impact of the structure in place to reduce the impact. In another air pressure damping structure, fuel gas enters the power cavity from the damping cavity, which may realize a relatively gentle driving force output to reduce the start-up overload.

It may be seen that effects of the above structures in the reduction of impact and overload are not comprehensive enough. Not only the problem related to operation impact of the ignition components is not solved, there are also problems that a big impact and overload exists at the start-up moment of the pyrotechnic hydraulic damping products and that the pyrotechnic pneumatic damping structure generally only has the effect of one-side overload reduction or buffering when starting (or putting in place). Therefore, there is still no displacement-driven pyrotechnic solution to meet the requirements of low impact and low overload of precision instruments or apparatus.

### SUMMARY

Aiming at the shortcomings of the related arts, the present application provides a pyrotechnic displacement driving device with low impact and low overload, which has the functions of both initial locking and in-place locking.

In a first aspect, there is provided a pyrotechnic driving device, including: a housing, a rear cover and an end cover, and the rear cover and the end cover are hermetically provided at two ends of the housing; a special-shaped nut provided in the housing and matched, in a threaded connection manner, with an inner wall of the housing; a fuel gas generator provided in the housing and positioned between the special-shaped nut and the rear cover; a sleeve provided in the housing and positioned between the special-shaped nut and the end cover, and a first accommodating cavity being formed between the sleeve and the housing; a force bearing column and a piston rod, and the force bearing column and the piston rod are fixedly connected with each other, are arranged in the sleeve, are provided between the special-shaped nut and the end cover along a axial direction of the sleeve and are configured to move in the axial direction in the sleeve; and a second accommodating cavity is formed between the sleeve and the piston rod, and a third accommodating cavity is formed between the force bearing column and the special-shaped nut, and the second accommodating cavity and the third accommodating cavity are configured to communicate with each other; a fuel gas outlet of the fuel gas generator is configured to discharge fuel gas to a fourth accommodating cavity positioned in the housing and between the special-shaped nut and the rear cover, and the special-shaped nut is provided with a fuel gas channel, through which the fuel gas in the fourth accommodating cavity enters the first accommodating cavity; the sleeve is provided with a through hole of the sleeve, and under the condition that the force bearing column abuts against the special-shaped nut, the through hole of the sleeve is positioned on a side of the piston disc portion of the piston rod far away from the special-shaped nut, and the fuel gas in the first accommodating cavity enters the third accommodating cavity through the second accommodating cavity, and the fuel gas in the third accommodating cavity is configured to exert a force on the force bearing column to move the piston rod away from the special-shaped nut; under the condition that the force bearing column is positioned at a side of the through hole of the sleeve far away from the special-shaped nut, the fuel gas in the first accommodating cavity enters the third accommodating cavity through the through hole of the sleeve.

Compared with the related arts, the solution provided by the present application at least includes the following beneficial technical effects.

By using the variable-channel air pressure damping technology, the present disclosure not only realizes that the driving force slowly increases from zero to stable output at the initial stage of movement, but also realizes the function of reverse deceleration at the late stage of movement, thus avoiding large overload and structural impact to the greatest extent, and enabling the driven object to reach an ideal displacement mode.

The pressure decreases step by step in the second accommodating cavity and in the third accommodating cavity due to the flow limiting of small holes such as the through hole of the sleeve. When the fuel gas pressure in the third accommodating cavity is less than that in the second accommodating cavity, the piston rod does not output pushing force. Therefore, at the initial stage of operation, the pressure of the third accommodating cavity may rise steadily, and gradually exert pushing force to the piston rod.

Combined with the first aspect, in some implementations of the first aspect, the piston disc portion is provided with a groove of piston rod, and an end of the force bearing column is matched with the groove of piston rod; the force bearing column further includes a first inner cavity of the force bearing column, which is positioned at a side of the force bearing column close to the piston rod and communicated with the groove of piston rod; the device further includes an air valve and a spring, and the air valve and the spring are provided in the first inner cavity of the force bearing column and the groove of piston rod, and the spring is pressed between the air valve and the wall of the groove of piston rod; and the air valve and the spring are configured to move back and forth in the first inner cavity of the force bearing column; under the condition that the air valve is out of contact with the first inner cavity of the force bearing column, the third accommodating cavity and the groove of piston rod communicate with a notch on the air valve through the first inner cavity of the force bearing column.

The fuel gas valve and the spring form a non-fully-closed one-way valve, which allows the fuel gas to flow slowly from the second accommodating cavity to the third accommodating cavity, but when the fuel gas flows from the third accommodating cavity to the second accommodating cavity, the fuel gas flow channel is completely open and the fuel gas may pass through the fuel gas flow channel smoothly. During the movement of fuel gas, the pressure in the second accommodating cavity and the pressure in the third accommodating cavity decreases step by step due to the limiting effect of fuel gas valve. When the fuel gas pressure in the third accommodating cavity is less than that in the second accommodating cavity, the piston rod does not output pushing force. Therefore, at the initial stage of operation, the pressure in the third accommodating cavity may rise steadily, and gradually exert pushing force to the piston rod.

Combined with the first aspect, in some implementations of the first aspect, the force bearing column further includes a second inner cavity of the force bearing column and a third inner cavity of the force bearing column, and the second inner cavity of the force bearing column is connected with and positioned between the first inner cavity of the force bearing column and the third inner cavity of the force bearing column, and an inner diameter of the second inner cavity of the force bearing column is smaller than an inner diameter of the third inner cavity of the force bearing column, and the inner diameter of the third inner cavity of the force bearing column is smaller than an inner diameter of the first inner cavity of the force bearing column.

Inner cavities with different sizes are provided in the force bearing column, which is convenient for adjusting the flow rate and pressure of fuel gas in the second accommodating cavity and the third accommodating cavity.

Combined with the first aspect, in some implementations of the first aspect, the piston rod includes the piston disc portion and the piston rod portion, and a through hole of the piston is provided on a side of the piston rod portion close to the piston disc portion, and the through hole of the piston penetrates between the second accommodating cavity and the groove of piston rod.

The pressure in the second accommodating cavity to the pressure the third accommodating cavity decreases step by step due to the flow limiting of small holes such as through holes of the piston. When the fuel gas pressure in the third accommodating cavity is less than that in the second accommodating cavity, the piston rod does not output pushing force. Therefore, at the initial stage of operation, the pressure of the third accommodating cavity may rise steadily, and gradually exert pushing force to the piston rod.

Combined with the first aspect, in some implementations of the first aspect, the special-shaped nut includes a nut bearing surface, which divides the special-shaped nut into a first nut accommodating groove and a second nut accommodating groove, and the first nut accommodating groove is configured to accommodate the fuel gas generator, and the second nut accommodating groove is configured to accommodate the force bearing column.

Combined with the first aspect, in some implementations of the first aspect, a side of the nut bearing surface facing the piston rod is provided with a groove of the bearing surface, and an end surface around the periphery of the groove of the bearing surface is configured to abut against the force bearing column, and the groove of the bearing surface is configured to form a smallest space of the third accommodating cavity.

The groove of the bearing surface is used to make the left side of the force bearing column always have enough space to contain fuel gas, which is convenient to realize the initial power source of the force bearing column.

Combined with the first aspect, in some implementations of the first aspect, a base of the force bearing column abuts against the special-shaped nut, and a through hole of base is provided on the base of the force bearing column, and the through hole of base is communicated with the groove of the bearing surface; the device further includes an unlocking piston, and the unlocking piston is fitted over the force bearing column and covers the base through hole.

Under the condition that there is fuel gas in the third accommodating cavity, the fuel gas may first push the unlocking piston to unlock, instead of the force bearing column, which is beneficial to realize that the driving force slowly increases from zero to stable output at the initial stage of movement.

Combined with the first aspect, in some implementations of the first aspect, the device further includes a locking ring, and the locking ring is fitted over the force bearing column and positioned between the unlocking piston and the piston rod.

The locking ring is used to provide resistance for the movement of the unlocking piston, which is beneficial to realize that the driving force slowly increases from zero to stable output at the initial stage of movement.

Combined with the first aspect, in some implementations of the first aspect, a buffer pad is further provided between the locking ring and the piston rod.

Buffer pad is beneficial to reduce the impact of unlocking piston on piston rod.

Combined with the first aspect, in some implementations of the first aspect, the locking ring includes a locking body portion and a locking protrusion portion, and an outer diameter of the locking body portion is smaller than an inner diameter of the unlocking piston; under the condition that the locking ring is not unlocked, the locking protrusion portion protrudes outward from the locking body portion along a radial direction; and after the locking ring is unlocked, the locking protrusion portion bends towards the locking body portion.

The initial locking of the snap ring structure in the present disclosure adopts the bending failure mode instead of the shearing mode, so that the fatigue resistance is improved while the kinetic energy of unlocking the piston in the process of unlocking the snap ring may be greatly reduced and striking may be avoided combining with the function of the buffering soft-fuel gasket to reduce the impact. Specifically, the unlocking piston may continue to move only after making the locking protrusion portion continue to buckle. This process consumes the kinetic energy of the unlocking piston after unlocking, reducing its impact energy, and finally the kinetic energy of the unlocking piston is absorbed by the buffer pad to avoid impact.

Combined with the first aspect, in some implementations of the first aspect, a thickness of the locking protrusion portion is less than or equal to the size of a gap between an inner hole of the unlocking piston and the locking body portion.

The thickness of the locking protrusion portion may be matched with the gap between the inner hole of the unlocking piston and the locking body portion, so that the moving resistance of the unlocking piston is within a reasonable range.

Combined with the first aspect, in some implementations of the first aspect, an enveloping circle of the locking protrusion portion is larger than the inner diameter of the unlocking piston.

Therefore, the moving resistance of the unlocking piston may be reasonably increased.

Combined with the first aspect, in some implementations of the first aspect, an side of the unlocking piston close to the force bearing column is provided with an unlocking piston accommodating groove, and the device further includes a first snap ring, which is provided in the unlocking piston accommodating groove, and abuts between the force bearing column and the sleeve, and an inner diameter of the first snap ring in a free state is smaller than an outer diameter of the unlocking piston accommodating groove.

The snap ring may be unlocked by its own elastic retraction after the unlocking piston is unlocked.

Combined with the first aspect, in some implementations of the first aspect, a side of the first snap ring close to the sleeve has a first chamfering bevel, and a side of the sleeve close to the first snap ring has a second chamfering bevel, and when the first snap ring is positioned in the unlocking piston accommodating groove, the first chamfering bevel is matched with the second chamfering bevel.

Chamfering bevel may make the radial dimension transition smoothly, which is convenient for the snap ring to slide into the sleeve.

Combined with the first aspect, in some implementations of the first aspect, the inner side of the unlocking piston is dynamically sealed with the force bearing column through an O-ring, and the outer side of the unlocking piston is dynamically sealed with the sleeve through an O-ring.

Combined with the first aspect, in some implementations of the first aspect, the device further includes a second snap ring, which is provided in a groove of the piston disc portion; a side of the sleeve close to the end cover is provided with a sleeve groove, and an outer diameter of the second snap ring in a free state is larger than an inner diameter of the sleeve groove, and after the second snap ring enters the sleeve groove, the second snap ring abuts against the inner wall of the sleeve groove, and an inner diameter of the second snap ring is smaller than an outer diameter of the piston disc portion.

When the piston rod moves by a farthest distance toward the end cover, the snap ring may move from the inner cavity of the sleeve body portion to the sleeve groove. Due to the sudden increase of the inner diameter of the sleeve groove, the snap ring may expand by its own elastic force when the piston rod moves in place, and abut against the wall of the sleeve groove, thus acting a blocking force on the piston disc portion to realize the in-place locking function.

Combined with the first aspect, in some implementations of the first aspect, both the special-shaped nut and the force bearing column are provided with key slots, and the key slot of the special-shaped nut and the key slot of the force bearing column are matched through keys.

Thereby the rotational freedom of the force bearing column and the piston rod is limited.

Combined with the first aspect, in some implementations of the first aspect, the device further includes a front soft-fuel gasket provided between the fuel gas generator and the special-shaped nut.

Combined with the first aspect, in some implementations of the first aspect, the device further includes a rear soft-fuel gasket provided between the fuel gas generator and the rear cover.

The disclosure utilizes the soft-fuel gasket to isolate the fuel gas generator from the housing, thus avoiding the influence of ignition impact on the external structure.

Combined with the first aspect, in some implementations of the first aspect, the piston rod is dynamically sealed with the sleeve through an O-ring.

Combined with the first aspect, in some implementations of the first aspect, the piston rod is dynamically sealed with the end cover through an O-ring.

Combined with the first aspect, in some implementations of the first aspect, the sleeve is statically sealed with the end cover by a sealing ring.

Combined with the first aspect, in some implementations of the first aspect, the housing is statically sealed with the end cover through an O-ring.

Combined with the first aspect, in some implementations of the first aspect, the rear cover is statically sealed with the housing by a sealing ring.

### BRIEF DESCRIPTION OF THE DRAWINGS

FIG. 1 is a schematic structural view of a fuel gas damping pyrotechnic driving device provided by an embodiment of the present application.
FIG. 2 is a schematic structural view of a fuel gas damping pyrotechnic driving device provided by an embodiment of the present application.
FIG. 3 is a structural schematic view of a special-shaped nut provided by an embodiment of the application.
FIG. 4 is a structural schematic view of a force bearing column provided by an embodiment of the present application.
FIG. 5 is a structural schematic view of a snap ring provided by an embodiment of the present application.
FIG. 6 is a partial enlarged view of the spring and the air valve.
FIG. 7 is a schematic structural view of a one-way valve provided by an embodiment of the present application.
FIG. 8 shows schematic structural views of a one-way valve provided by an embodiment of the present application when P2 is greater than P3 and P3 is greater than P2, respectively.
FIG. 9 is a schematic view of fuel gas flow in an initial buffer stage of operation of a device provided by an embodiment of the application.
FIG. 10 is a schematic structural view of a locking ring provided by an embodiment of the present application.
FIG. 11 is a schematic view of fuel gas flow in an initial acceleration stage of operation of a device provided by an embodiment of the application.
FIG. 12 is a schematic view of fuel gas flow in a mid-term acceleration stage of a device provided by an embodiment of the application.
FIG. 13 is a schematic structural view of a device in a locked state of after it is in place provided by an embodiment of the application.

### DETAILED DESCRIPTION

The present application will be described in further detail with the attached drawings and specific examples.

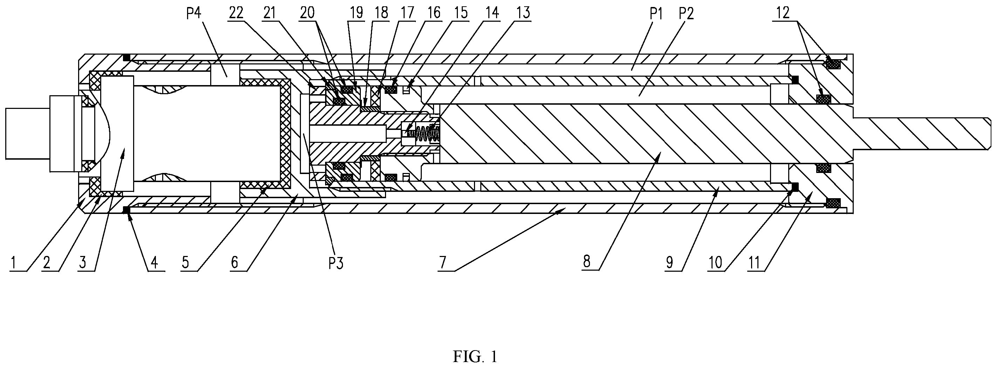

FIG. 1 shows a low-impact and low-overload fuel gas damping pyrotechnic driving device provided by an embodiment of the application. The pyrotechnic driving device may include a rear cover 1, a rear soft-fuel gasket 2, a fuel gas generator 3, a sealing ring 4, a front soft-fuel gasket 5, a special-shaped nut 6, a housing 7, a piston rod 8, a sleeve 9, a sealing ring 10, an end cover 11, an O-ring 12, a spring 13, an air valve 14, a snap ring 15, an O-ring 16, a buffer pad 17, a locking ring 18 and an unlocking piston 19, an O-ring 20, a snap ring 21 and a force bearing column 22.

The housing 7 may be in a cylindrical structure, and both ends are sealed by the rear cover 1 and the end cover 11 respectively. The external thread of the rear cover 1 may be matched with the internal thread of the housing 7, and a sealing ring 4 may be provided between the rear cover 1 and the housing 7 to realize the static sealing of the rear cover 1 and the housing 7. The external thread of the end cover 11 may be matched with the internal thread of the housing 7, and a sealing ring 12 is provided around the outer wall of the end cover 11, and the sealing ring 12 abuts against the inner wall of the housing 7 to realize the static sealing of the end cover 11 and the housing 7.

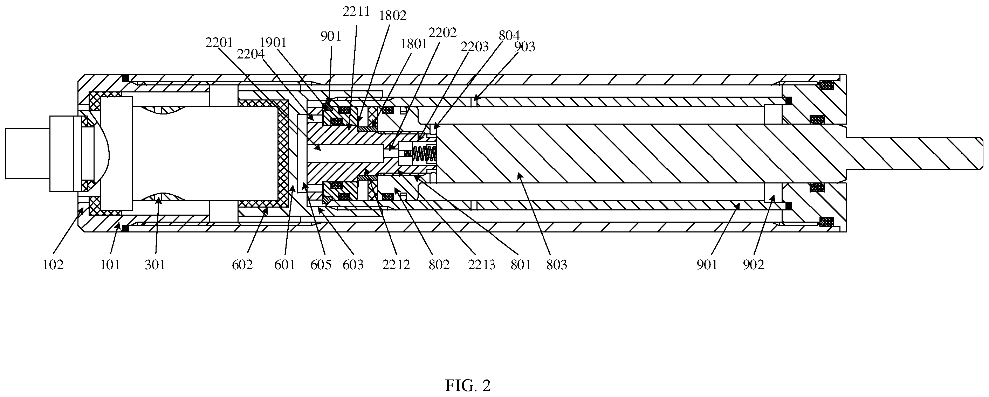

Referring to FIGS. 1 and 2, the rear cover 1 includes a body portion 101 of rear cover and a step portion 102 of rear cover. The body portion 101 of rear cover has a cylindrical structure, and the outer periphery of the body portion 101 of rear cover is provided with threads to match with the housing 7. The inner space of the body portion 101 of rear cover may be used to install the fuel gas generator 3. The step portion 102 of rear cover is provided on the side of the rear cover 1 far away from the housing 7, and the step portion 102 of rear cover protrudes in a radial direction inward from the body portion 101 of rear cover. The fuel gas generator 3 may abut against the step portion 102 of the rear cover through the rear soft-fuel gasket 2, so that there is no rigid contact between the rear cover 1 and the fuel gas generator 3. The rear soft-fuel gasket 2 may also be used to seal the space between the rear cover 1 and the fuel gas generator 3. The fuel gas generator 3 may protrude from the inner hole surrounded by the step portion 102 of rear cover.

With continued reference to FIG. 1, a special-shaped nut 6 is provided inside the housing 7. The outer periphery of the special-shaped nut 6 is provided with threads, which may be matched with the internal threads of the housing 7. The rear cover 1 and the special-shaped nut 6 may be provided at intervals along the axial direction of the pyrotechnic driving device.

With reference to FIGS. 1 and 2, a nut bearing surface 601 is provided in the middle of the special-shaped nut 6. Two ends of the nut bearing surface 601 are respectively a nut accommodating groove 602 and a nut accommodating groove 603 of the special-shaped nut 6. The nut accommodating groove 602 is provided facing the rear cover 1, and the front soft-fuel gasket 5 is provided in the nut accommodating groove 602. One end of the fuel gas generator 3 close to the housing 7 abuts against the nut accommodating groove 602 through the front soft-fuel gasket 5, so that the special-shaped nut 6 and the fuel gas generator 3 have no rigid contact.

Referring to FIG. 1 and FIG. 2, a sleeve 9 is provided in the nut accommodating groove 603 of the special-shaped nut 6. The external thread of the sleeve 9 may be matched with the internal thread of the nut accommodating groove 603. The axial direction of the sleeve 9 may be coaxial with the axial direction of the housing 7. The end of the sleeve 9 far away from the special-shaped nut 6 may abut against the end cover 11 through the sealing ring 10, so as to realize compression sealing. The piston rod 8, the spring 13, the air valve 14, the snap ring 15, the O-ring 16, the buffer pad 17, the locking ring 18, the unlocking piston 19, the O-ring 20, the snap ring 21 and the force bearing column 22 are provided in the cavity surrounded by the nut accommodating groove 603 of the special-shaped nut 6, the sleeve 9 and the end cover 11.

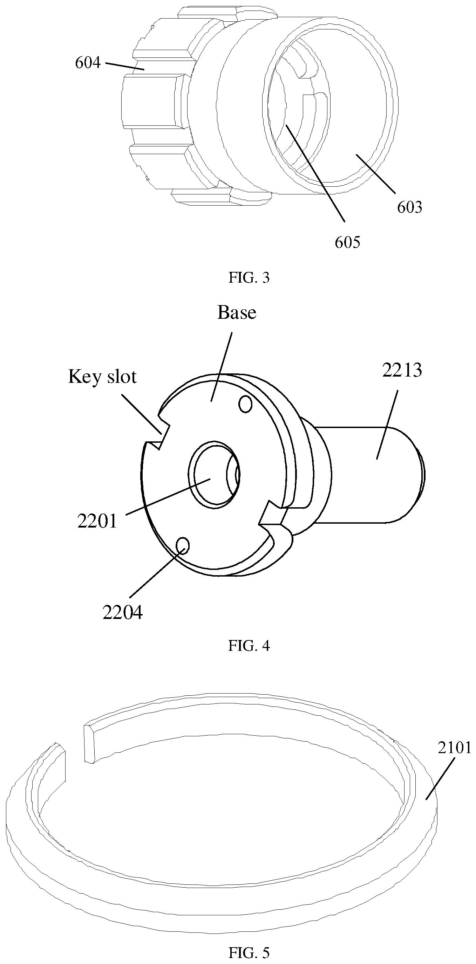

One end of the force bearing column 22 abuts against the wall of the nut accommodating groove 603 of the special-shaped nut 6, and the other end is fixedly connected with the piston rod 8. In some embodiments, the base of the force bearing column 22 and the wall of the nut accommodating groove 603 may be provided with key slots (as shown in FIG. 3), and keys may be provided in the key slots and are matched with the special-shaped nut 6 and the force bearing column 22 to limit the rotational freedom of the force bearing column 22 and the piston rod 8.

FIG. 4 shows a schematic structural view of the force bearing column 22. With reference to FIG. 1, FIG. 2 and FIG. 4, the force bearing column 22 is provided with a column portion 2211, a column portion 2212 and a column portion 2213 in sequence at one side of the base near the piston rod 8. The radial dimension of that column portion 2211, the column portion 2212 and the column portion 2213 decrease in sequence.

The outer periphery of the column portion 2211 may be sleeved with the unlocking piston 19, and the unlocking piston 19 is further provided in the sleeve 9. That is, the unlocking piston 19 is provided between the force bearing column 22 and the sleeve 9. Both the inner wall and the outer wall of the unlocking piston 19 are provided with O-rings 20. Therefore, the outer side of the unlocking piston 19 may form a dynamic seal with the piston rod 8 through the O-ring 20, and the inner side of the unlocking piston 19 may form a dynamic seal with the column portion 2211 of the force bearing column 22 through the O-ring 20.

In the initial state, the side of the unlocking piston 19 close to the fuel gas generator 3 may abut against the base of the force bearing column 22. The base of the force bearing column 22 may be provided with a through hole 2204 of base and is communicated with the groove 605 of the bearing surface of the special-shaped nut 6. The unlocking piston 19 may cover the through hole 2204 of base. The groove 605 of the bearing surface is provided on the nut bearing surface 601 of the special-shaped nut 6 to form a cavity P3 between the nut bearing surface 601 and the force bearing column 22. The groove 605 of the bearing surface may be used to form the smallest space of the cavity P3.

One side of the unlocking piston 19 near the fuel gas generator 3 may also have an unlocking piston accommodating groove 1901 and the unlocking piston accommodating groove 1901 is used for accommodating the snap ring 21. FIG. 5 shows a schematic structural view of the snap ring 21. The snap ring 21 may have a notch. That is to say, the snap ring 21 has a notched ring structure. This notch may be used to achieve circumferential contraction or circumferential expansion of the snap ring 21. The free outer diameter of the snap ring 21 is slightly smaller than the inner diameter of the long cylindrical section of the sleeve 9, and the snap ring may be unlocked by its own elastic retraction after unlocking.

With reference to FIGS. 1, 2 and 5, in the initial state, one end face of the snap ring 21 may abut against the base of the force bearing column 22, and the other end face may abut against the wall of the unlocking piston accommodating groove 1901. The side of the snap ring 21 away from the base of the force bearing column 22 may have a chamfering bevel 2101; correspondingly, the end of the sleeve 9 near the special-shaped nut 6 has a chamfering bevel 901. The chamfering bevel 2101 and the chamfering bevel 901 may be a 45°smooth bevel. In the initial state, the chamfering bevel 2101 and the chamfering bevel 901 may match with each other to achieve an initial locking.

Referring to FIG. 1 and FIG. 2, the outer periphery of the column portion 2212 may be sleeved with the locking ring 18, and the outer periphery of the locking ring 18 may be sleeved with the buffer pad 17. The outer periphery of the soft-fuel gasket pad 17 may be matched with the inner wall of the sleeve 9. The locking ring 18 may include a locking body portion 1801 and a locking protrusion portion 1802 (tab). In an initial state, the locking protrusion portion 1802 may protrude in a radial direction outward from the locking body portion 1801 and abut against the end face of the unlocking piston 19 near the piston rod 8. Thus, the axial movement of the unlocking piston 19 on the force bearing column 22 may be limited. The buffer pad 17 may be sleeved on the end of the locking ring 18 far away from the unlocking piston 19 and contact with the piston rod 8.

Referring to FIGS. 1 and 2, the outer periphery of the column portion 2213 may be provided with external threads. One side of the piston rod 8 close to the special-shaped nut 6 may have a groove 801 of piston rod adapted to the shape of the column portion 2213, and the inner wall of the groove 801 of piston rod is provided with threads, which may be matched with the external threads of the column portion 2213 and press the locking ring 18 between the piston rod 8 and the force bearing column 22.

The piston rod 8 may include a piston disc portion 802 and a piston rod portion 803. The radial dimension of the piston rod portion 803 may be smaller than the radial dimension of the piston disc portion 802. The piston disc portion 802 may be matched with the inner wall of the sleeve 9. An O-ring 16 may be provided on the outer periphery of the piston disc portion 802, and the sleeve 9 and the piston rod 8 may form a dynamic seal through the O-ring 16. The end of the piston rod portion 803 far away from the piston disc portion 802 may pass through the central hole of the end cover 11. The inner wall of the center hole of the end cover 11 may be provided with an O-ring 12, so that the piston rod 8 and the end cover 11 may form a dynamic seal through the O-ring 12.

One side of the piston rod portion 803 near the piston disc portion 802 may be provided with a through hole 804 of the piston as a fuel gas channel, and the through hole 804 of the piston may be communicated with the groove 801 of piston rod and the cavity P2 between the sleeve 9 and the piston rod 8.

The outer periphery of the piston disc portion 802 may also be provided with a groove to accommodate the snap ring 15. The structure view of the snap ring 15 may refer to the embodiment shown in FIG. 5. The snap ring 15 is located on the side of the O-ring 16 near the end cover 11. An end of the sleeve 9 near the end cover 11 is provided with a groove 902 of the sleeve. The inner diameter of the groove 902 of the sleeve may be larger than the inner diameter of the sleeve body portion 901. The outer diameter of the snap ring 15 in the free state is larger than the inner diameter of the sleeve body portion 901.

With reference to FIG. 1 and FIG. 2, the force bearing column 22 is axially provided with an inner cavity 2201 of the force bearing column, an inner cavity 2202 of the force bearing column and an inner cavity 2203 of the force bearing column which are communicated with each other. The inner cavity 2202 of the force bearing column is connected between inner cavity 2201 of the force bearing column and inner cavity 2203 of the force bearing column. The inner diameter of the inner cavity 2202 of the force bearing column may be smaller than the inner diameter of inner cavity 2203 of the force bearing column and smaller than the diameter of the inner cavity of the force bearing column 2201.

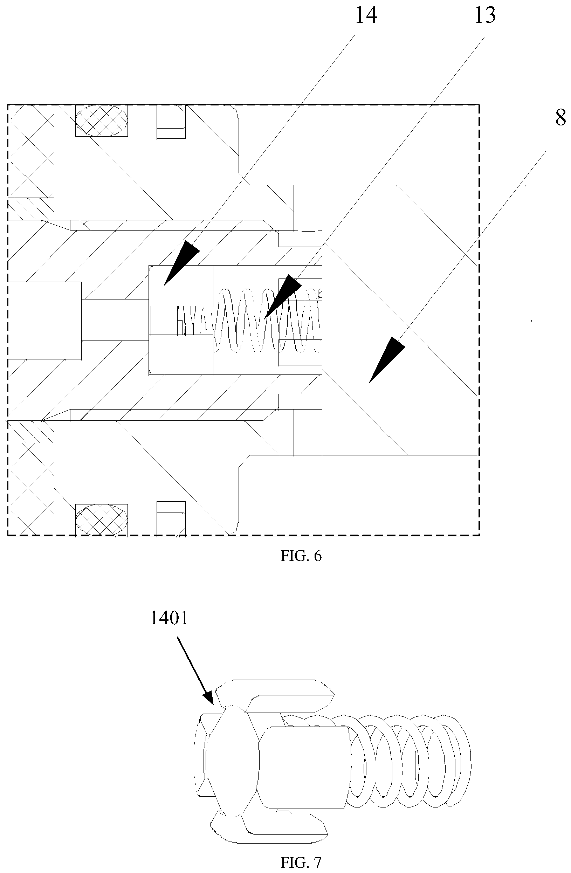

The inner cavity 2201 of the force bearing column is located at the side of the force bearing column 22 near the special-shaped nut 6. The inner cavity 2203 of the force bearing column is located at one side of the force bearing column 22 near the piston rod 8, and is used for accommodating the spring 13 and the air valve 14, and communicates with the groove 801 of piston rod of the piston rod 8. The accommodating spring 13 may be provided between the air valve 14 and the wall of the groove 801 of piston rod. The air valve 14 may move back and forth in the axial direction in the inner cavity 2203 of the force bearing column. Referring to FIG. 2 and FIG. 6, in the initial state, the spring 13 is in a pre-compressed state after the force bearing column 22 is tightened with the piston rod 8. Under the action of the spring 13, the air valve 14 may abut against the end face of the inner cavity 2203 of the force bearing column.

With reference to FIG. 1 to FIG. 13, the operation principle of the pyrotechnic driving device provided by the embodiment of the present application is described below.

The sidewall of the fuel gas generator 3 may be spaced from the inner wall of the body portion 101 the rear cover 1. The sidewall of the fuel gas generator 3 may also be spaced from the inner wall of the housing 7, that is, there are cavities P4 between the sidewall of the fuel gas generator 3 and the inner wall of the rear cover 1, and between the sidewall of the fuel gas generator 3 and the inner wall of the housing 7. The side wall of the fuel gas generator 3 may be provided with a fuel gas outlet 301. During operation, the fuel gas generator 3 generates fuel gas, and the ignition impact is absorbed by the soft-fuel gaskets 2 and 5 and is not transmitted to the outside. The fuel gas may enter the cavity P4 through the fuel gas outlet 301.

An accommodating cavity P1 may be formed between the sleeve 9 and the housing 7. As shown in FIG. 3, a plurality of fuel gas channels 604 are uniformly distributed in the circumferential direction at the matching part (the threads on this part not shown in FIG. 3) where the special-shaped nut 6 is matched with the housing 7. The fuel gas in the accommodating cavity P4 may enter the accommodating cavity P1 formed by the housing 7 through the fuel gas channel 604 on the special-shaped nut 6, and the accommodating cavity P1 is located on the side of the special-shaped nut 6 far from the rear cover 1.

An accommodating cavity P2 may be formed between the piston rod 8 and the sleeve 9. The sidewall of the sleeve 9 may have a through hole 903 of the sleeve as a fuel gas channel, so that the accommodating cavity P2 in the sleeve 9 may communicate with the accommodating cavity P1 outside the sleeve 9, that is, the fuel gas in the accommodating cavity P1 may enter the accommodating cavity P2 through the through hole 903 of the sleeve. That is, the through hole 903 of the sleeve is located at the side of the piston disc portion 802 far away from the force bearing column 22. One side of the piston rod portion 803 close to the piston disc portion 802 may be provided with a through hole 804 of the piston as a fuel gas channel, so that the accommodating cavity P2 in the sleeve 9 may communicate with the groove 801 of piston rod of the piston rod 8.

After entering the groove 801 of piston rod, the fuel gas may enter the inner cavity 2203 of the force bearing column 22. The air valve 14 and the spring 13 form an incompletely-closed one-way valve, which allows the fuel gas to flow slowly from the inner cavity 2203 of the force bearing column into the inner cavity 2202 of the force bearing column (that is, from the cavity P2 into the cavity P3), but when the fuel gas flows from the inner cavity 2202 of the force bearing column (that is, from the cavity P3 into the cavity P2), the fuel gas flow channel is completely open, and the fuel gas may pass smoothly.

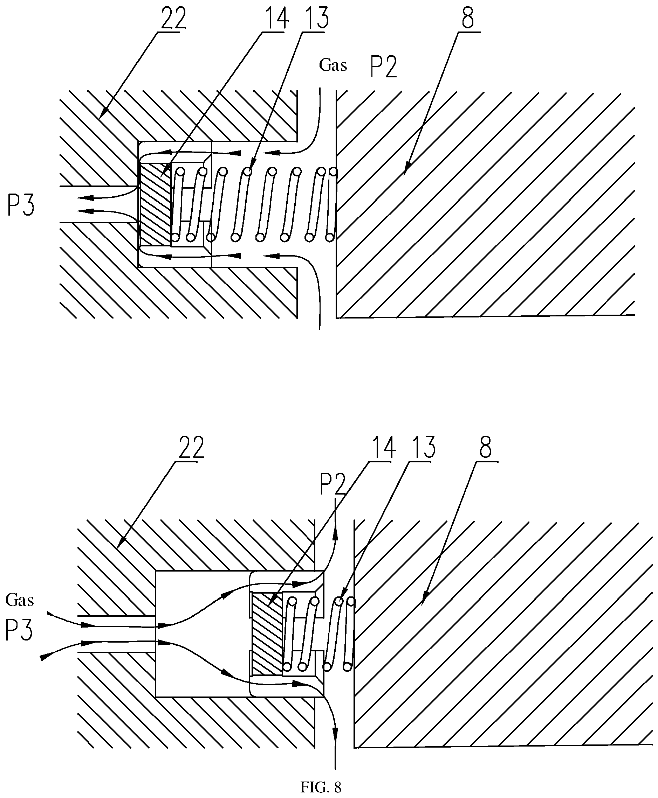

As shown in FIG. 7, the fuel gas valve 14 is in a cup-shaped configuration with several notches 1401, and the bottom is provided with a concaved platform to avoid completely blocking the fuel gas channel; and the shallower the depression depth is, the stronger the flow limiting effect of the valve is. As shown in FIG. 8, under the action of high-pressure fuel gas, the fuel gas may enter the gap between the fuel gas valve 14 and the inner cavity 2203 of the force bearing column through the notch 1401 on the fuel gas valve 14. Because gap is small, it will has a flow limiting effect on the fuel gas. With the amount of fuel gas passing through the fuel gas valve 14 is increasing, the fuel gas may exert a force on the fuel gas valve 14, so that the spring 13 is compressed, and the fuel gas channel is opened, so that the fuel gas may smoothly enter the inner cavity 2203 of the force bearing column from the inner cavity 2202 of the force bearing column.

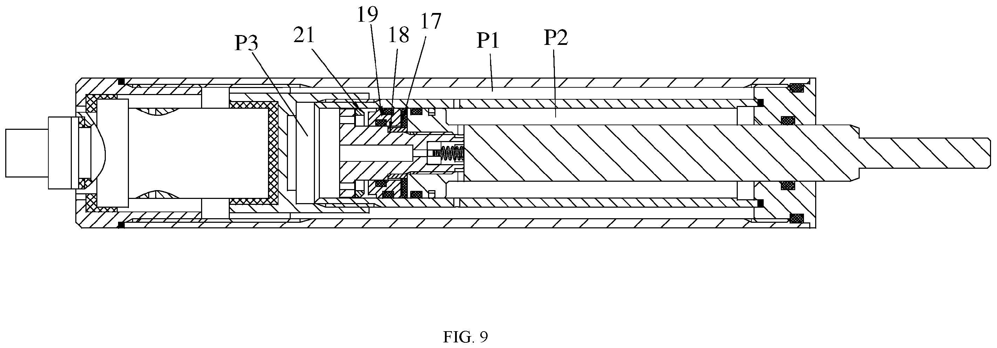

During the movement of the fuel gas, due to the flow limiting effect of the small holes such as the through hole 903 of the sleeve and the through hole 804 of the piston and the fuel gas valve 14, the pressure from the cavity P2 to the cavity P3 is gradually reduced. The locking strength between the air flow channel at the air valve 14 and the locking ring 18 may be controlled such that when the unlocking piston 19 destroys the locking ring 18 and unlocks the snap ring, the fuel gas pressure in the cavity P3 is less than P2, and the resultant force of P3 and P2 on the piston rod 8 still acts to the left, that is, the piston rod 8 does not output pushing force. The unlocked state of the locking ring 18 is shown in FIG. 9.

The unlocking principle of the locking ring 18 is as follows. In the initial state, the base of the force bearing column 22 may abut against the groove end surface at the periphery of the groove 605 of the bearing surface. When the cavity P3 is filled with fuel gas, the fuel gas may pass through the through hole of the base and exert a force on the unlocking piston 19 to move the unlocking piston 19 towards the piston rod 8. When the unlocking piston 19 moves towards the piston rod 8, the snap ring 21 may automatically shrink and return to a free state, so that the snap ring 21 may be located between the unlocking piston 19 and the base of the force bearing column 22.

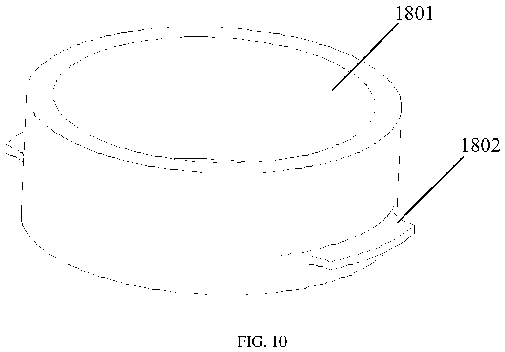

FIG. 10 shows a schematic structural view of the locking ring 18. The locking ring 18 may be made of metal with good ductility, and the thickness of the locking protrusion portion 1802 is approximately equal to the size of the gap between the locking body portion 1801 and the inner hole of the unlocking piston 19. The outer diameter of the locking body portion 1801 may be slightly smaller than the outer diameter of the column portion 2211 of the force bearing column 22. When the locking ring 18 is damaged by load, the locking protrusion portion 1802 fails to bend, and after bending, the locking protrusion portion 1802 is attached to the locking body portion 1801. The enveloping circle of the locking protrusion portion 1802 may be slightly larger than the inner diameter of the unlocking piston 19, and the unlocking piston 19 may continue to move only after making the locking protrusion portion 1802 continue to buckle. This process can consume the kinetic energy of the unlocking piston 19 after unlocking and reduce its impact energy, and finally the kinetic energy of the unlocking piston 19 is absorbed by the buffer pad 17 to avoid impact.

With the constant balance of fuel gas pressure in P3 and P2, due to the difference of fuel gas action area (the region where the fuel gas acts to the left is the annular region located on the right side of the piston disc portion 802, and the region where the fuel gas acts to the left is the left end face region of the force bearing column and the left end face region of the unlocking piston 19), the resultant force of fuel gas on piston rod 8 gradually changes from left to right, that is, piston rod 8 starts to output pushing force and drive load movement. This process realizes the slow increase of pushing force and avoids the large overload caused by the sudden increase of pushing force.

Due to the flowing limiting effect of the air valve 14, it will be in a dynamic balance state after starting, and the output pushing force will be stable. The pushing force is adjusted by using air valves 14 with different flow limiting effects.

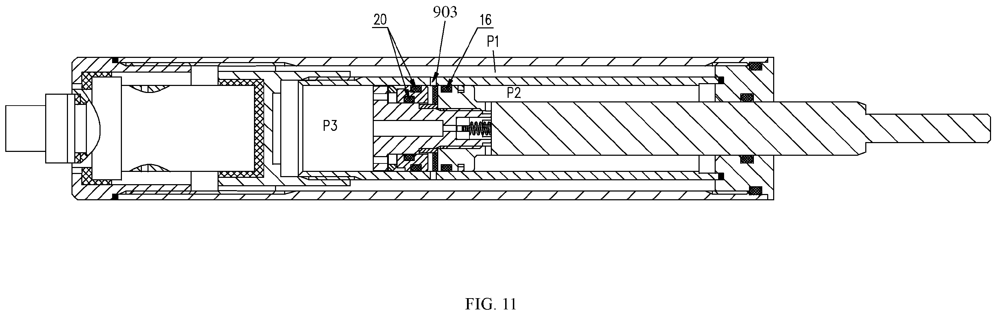

As shown in FIG. 11, after the piston rod 8 moves by a certain stroke, the through hole 903 of the sleeve of the sleeve 9 is blocked by the two O-rings 16 and 20 of the piston rod 8, and at this time, the pushing force is continuously output by the residual fuel gas in P2 and P3.

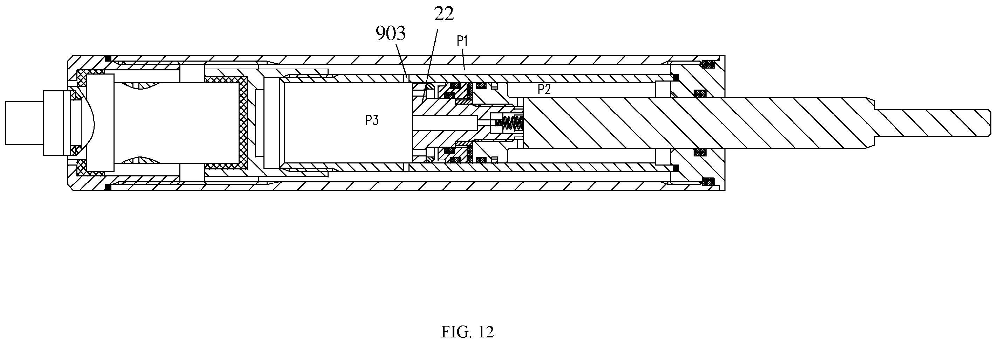

As shown in FIG. 12, when the piston rod 8 continues to move so that after the through hole 903 of the sleeve is located on the left side of the force bearing column 22, the fuel gas flow path changes. The fuel gas first enters the cavity P3 from the cavity P1, and then enters the cavity P2 through the fuel gas valve 14. If the fuel gas generator produces fuel gas quickly, the fuel gas pressure in P2 may be lower than P3, and the fuel gas in P3 may flow into P2 smoothly through the fuel gas valve 14 to reduce the output pushing force.

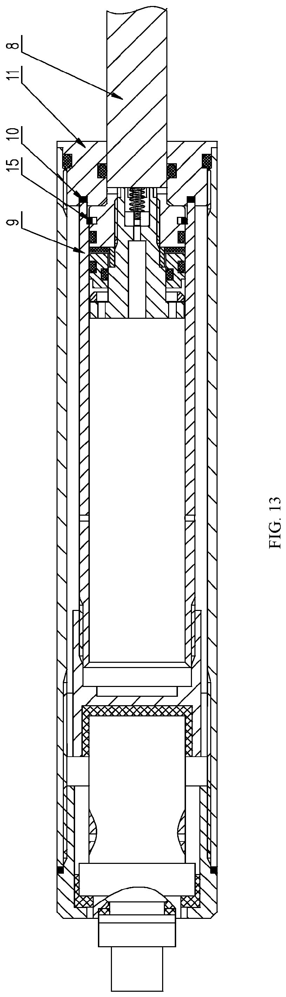

As shown in FIG. 13, with the movement of the piston rod 8, the cavity P2 gradually decreases and the pressure gradually increases, and the fuel gas in P2 is prevented from flowing back into cavity P3 depending on the flow limiting function of the fuel gas valve. The pressure difference between P2 and P3 may generate a force on the piston that hinders the movement of the piston to realize deceleration.

When the piston rod 8 moves by a farthest distance toward the end cover 11, the snap ring 15 may move from the inner cavity of the sleeve body portion 901 to the groove 902 of the sleeve. Due to the sudden increase of the inner diameter of the groove 902 of the sleeve, the snap ring 15 may expand by its own elastic force when the piston rod 8 moves in place, and abut against the wall of the groove 902 of the sleeve, thus exerting a blocking force on the piston disc portion 802 to realize the in-place locking function.

Although the present disclosure has been disclosed in terms of preferred embodiments, the preferred embodiments are not intended to limit the present disclosure. Any person skilled in the art may make possible changes and modifications without departing from the spirit and scope of the present disclosure. Therefore, the scope of protection of the present disclosure should be based on the scope defined by the claims of the present disclosure.

## Claims

1. A pyrotechnic driving device, comprising:
a housing (7), a rear cover (1) and an end cover (11), wherein the rear cover (1) and the end cover (11) are hermetically provided at two ends of the housing (7);
a special-shaped nut (6) provided in the housing (7) and matched, in a threaded connection manner, with an inner wall of the housing (7);
a fuel gas generator (3) provided in the housing (7) and positioned between the special-shaped nut (6) and the rear cover (1);
a sleeve (9) provided in the housing (7) and positioned between the special-shaped nut (6) and the end cover (11), and a first accommodating cavity (P1) being formed between the sleeve (9) and the housing (7);
a force bearing column (22) and a piston rod (8), wherein the force bearing column (22) and the piston rod (8) are fixedly connected with each other, are provided in the sleeve (9), are arranged between the special-shaped nut (6) and the end cover (11) along a axial direction of the sleeve (9) and are configured to move in the axial direction of the sleeve (9) in the sleeve (9); and a second accommodating cavity (P2) is formed between the sleeve (9) and the piston rod (8), and a third accommodating cavity (P3) is formed between the force bearing column (22) and the special-shaped nut (6), and the second accommodating cavity (P2) and the third accommodating cavity (P3) are configured to communicate with each other;
wherein a fuel gas outlet (301) of the fuel gas generator (3) is configured to discharge fuel gas to a fourth accommodating cavity (P4) positioned in the housing (7) and between the special-shaped nut (6) and the rear cover (1), and the special-shaped nut (6) is provided with a fuel gas channel (604), through which the fuel gas in the fourth accommodating cavity (P4) enters the first accommodating cavity (P1);
wherein the sleeve (9) is provided with a through hole (903) of the sleeve, and under the condition that the force bearing column (22) abuts against the special-shaped nut (6), the through hole (903) of the sleeve is positioned on a side of the piston disc portion (802) of the piston rod (8) far away from the special-shaped nut (6), and the fuel gas in the first accommodating cavity (P1) enters the third accommodating cavity (P3) through the second accommodating cavity (P2), and the fuel gas in the third accommodating cavity (P3) is configured to exert a force on the force bearing column (22) to move the piston rod (8) away from the special-shaped nut (6);
under the condition that the force bearing column (22) is positioned at a side of the through hole (903) of the sleeve far away from the special-shaped nut (6), the fuel gas in the first accommodating cavity (P1) enters the third accommodating cavity (P3) through the through hole (903) of the sleeve.

2. The device according to claim 1, wherein the piston disc portion (802) is provided with a groove (801) of piston rod, and an end of the force bearing column (22) is matched with the groove (801) of piston rod;
the force bearing column (22) further comprises a first inner cavity (2203) of force bearing column, and the first inner cavity (2203) of force bearing column is positioned at a side of the force bearing column (22) close to the piston rod (8) and communicated with the groove (801) of piston rod;
the device further comprises an air valve (14) and a spring (13), wherein the air valve (14) and the spring (13) are provided in the first inner cavity (2203) of force bearing column and the groove (801) of piston rod, and the spring (13) is pressed between the air valve (14) and the wall of the groove (801) of piston rod; and the air valve (14) and the spring (13) are configured to move back and forth in the first inner cavity (2203) of the force bearing column;
under the condition that the air valve (14) is out of contact with the first inner cavity (2203) of the force bearing column, the third accommodating cavity (P3) and the groove (801) of piston rod communicate with a notch (1401) on the air valve (14) through the first inner cavity (2203) of the force bearing column.

3. The device according to claim 2, wherein the force bearing column (22) further comprises a second inner cavity (2202) of the force bearing column and a third inner cavity (2201) of the force bearing column, and the second inner cavity (2202) of the force bearing column is connected and positioned between the first inner cavity (2203) of the force bearing column and the third inner cavity (2201) of the force bearing column, and the inner diameter of the second inner cavity (2202) of the force bearing column is smaller than an inner diameter of the third inner cavity (2201) of the force bearing column, and the inner diameter of the third inner cavity (2201) of the force bearing column is smaller than an inner diameter of the first inner cavity (2203) of the force bearing column.

4. The device according to claim 2 or 3, wherein the piston rod (8) comprises the piston disc portion (802) and the piston rod portion (803), and a through hole (804) of the piston is provided on a side of the piston rod portion (803) close to the piston disc portion (802), and the through hole (804) of the piston penetrates between the second accommodating cavity (P2) and the groove (801) of piston rod.

5. The device according to any one of claims 1-4, wherein the special-shaped nut (6) comprises a nut bearing surface (601), and the nut bearing surface (601) divides the special-shaped nut (6) into a first nut accommodating groove (602) and a second nut accommodating groove (603), wherein the first nut accommodating groove (602) is configured to accommodate the fuel gas generator (3), and the second nut accommodating groove (603) is configured to accommodate the force bearing column (22).

6. The device according to claim 5, wherein a side of the nut bearing surface (601) facing the piston rod (8) is provided with a groove (605) of the bearing surface, and an end surface around the periphery of the groove (605) of the bearing surface is configured to abut against the force bearing column (22), and the groove (605) of the bearing surface is configured to form a smallest space of the third accommodating cavity (P3).

7. The device according to claim 6, wherein a base of the force bearing column (22) abuts against the special-shaped nut (6), and a through hole (2204) of the base is provided on the base of the force bearing column (22), and the through hole (2204) of the base is communicated with the groove (605) of the bearing surface;
the device further comprises an unlocking piston (19), and the unlocking piston (19) is fitted over the force bearing column (22) and covers the through hole (2204) of the base.

8. The device according to claim 7, wherein the device further comprises a locking ring (18), and the locking ring (18) is fitted over the force bearing column (22) and positioned between the unlocking piston (19) and the piston rod (8).

9. The device according to claim 8, wherein a buffer pad (17) is further provided between the locking ring (18) and the piston rod (8).

10. The device according to claim 8 or 9, wherein the locking ring (18) comprises a locking body portion (1801) and a locking protrusion portion (1802), and the outer diameter of the locking body portion (1801) is smaller than the inner diameter of the unlocking piston (19); under the condition that the locking ring (18) is not unlocked, the locking protrusion portion (1802) protrudes outward from the locking body portion (1801) along a radial direction; and after the locking ring (18) is unlocked, the locking protrusion portion (1802) bends towards the locking body portion (1801).

11. The device according to claim 10, wherein the thickness of the locking protrusion portion (1802) is less than or equal to the size of the gap between an inner hole of the unlocking piston (19) and the locking body portion (1801).

12. The device according to claim 10 or 11, wherein the enveloping circle of the locking protrusion portion (1802) is larger than the inner diameter of the unlocking piston (19).

13. The device according to any one of claims 7-12, wherein one side of the unlocking piston (19) close to the force bearing column (22) is provided with an unlocking piston accommodating groove (1901), and the device further comprises a first snap ring (21), which is provided in the unlocking piston accommodating groove (1901), and abuts between the force bearing column (22) and the sleeve (9), and the inner diameter of the first snap ring (21) in a free state is smaller than the outer diameter of the unlocking piston accommodating groove (1901).

14. The device according to claim 13, wherein one side of the first snap ring (21) close to the sleeve (9) has a first chamfering bevel (2101), and one side of the sleeve (9) close to the first snap ring (21) has a second chamfering bevel (901), and when the first snap ring (21) is positioned in the unlocking piston accommodating groove (1901), the first chamfering bevel (2101) is matched with the second chamfering bevel (901).

15. The device according to any one of claims 1-14, wherein the device further comprises a second snap ring (15), which is provided in a groove of the piston disc portion (802);
one side of the sleeve (9) close to the end cover (11) is provided with a groove (902) of the sleeve, and the outer diameter of the second snap ring (15) in a free state is larger than the inner diameter of the groove (902) of the sleeve, and after the second snap ring (15) enters the groove (902) of the sleeve, the second snap ring (15) abuts against the inner wall of the groove (902) of the sleeve, and the inner diameter of the second snap ring (15) is smaller than the outer diameter of the piston disc portion (802).

16. The device according to any one of claims 1-15, wherein both the special-shaped nut (6) and the force bearing column (22) are provided with key slots, and the key slot of the special-shaped nut (6) and the key slot of the force bearing column (22) are fitted through a key.

17. The device according to any one of claims 1-16, wherein the device further comprises a front soft-fuel gasket (5) provided between the fuel gas generator (3) and the special-shaped nut (6).

18. The device according to any one of claims 1-17, wherein the device further comprises a rear soft-fuel gasket (2) provided between the fuel gas generator (3) and the rear cover (1).
